# EUROPÄISCHE PATENTSCHRIFT

(11) **EP 1 538 175 B1**
(45) Veröffentlichungstag und Bekanntmachung des Hinweises auf die Patenterteilung: **21.11.2007**
(21) Anmeldenummer: 04027268.4
(22) Anmeldetag: 17.11.2004
(51) Int. Cl.: C08J 7/18, B29C 71/04, B32B 3/26, B32B 3/28, B32B 3/30

(54) **Verfahren zur Herstellung von genarbten Formkörpern und die danach hergestellten Formkörpern**
Process for producing grained moulded articles and the articles formed thereby
Procédé de fabrication d'un objet moulé granulé et objet fabriqué selon ce procédé

(30) Priorität: 04.12.2003 DE 10356665
(43) Veröffentlichungstag der Anmeldung: 08.06.2005
(73) Patentinhaber: Benecke-Kaliko AG, 30419 Hannover (DE)
(72) Erfinder: Bühring, Jürgen, Dr., 73033 Göppingen (DE); Hülsewede, Volker Jörg, Dr., 73037 Göppingen (DE); Ohlinger, Rainer, Dr., 30519 Hannover (DE); Schäfer, Burkhard, Dr., 78247 Hilzingen (DE)
(74) Vertreter: Finger, Karsten

(56) Entgegenhaltungen:
- EP-A- 0 425 695
- EP-A- 0 759 351
- EP-A- 1 149 858
- DE-A1- 4 007 876

## Beschreibung

Die Erfindung betrifft ein Verfahren zur Herstellung eines genarbten mehrlagigen Formkörpers mit einer Oberfolie, die partiell vernetzte polymere Materialien, insbesondere auf Basis von Polyolefinen, und gegebenenfalls weitere Additive enthält, und mindestens einer darauf laminierten Unterfolie, wobei das mehrlagige Folienlaminat geprägt, zum Erzielen einer im Tiefziehprozess geeigneten Narbstabilität mit Elektronenstrahlen behandelt und das behandelte mehrlagige Folienlaminat zu einem genarbten, mehrlagigen Formkörper tiefgezogen wird.

Daneben betrifft die Erfindung auch ein Verfahren zur Herstellung eines genarbten, mehrlagigen Formkörpers mit einer Oberfolie, die partiell vernetzte polymere Materialien, insbesondere auf Basis von Polyolefinen, und gegebenenfalls weitere Additive enthält, und mindestens einer darauf laminierten Unterfolie, wobei das mehrlagige Folienlaminat mit Elektronenstrahlen behandelt und das behandelte genarbte, mehrlagige Folienlaminat zu einem Formkörper weiterverarbeitet wird.

Des Weiteren betrifft die Erfindung nach diesen Verfahren erhaltene trägergestützte, genarbte, mehrlagige Formkörper sowie deren Verwendung zur Innenverkleidung von Kraftfahrzeugen.

Sowohl im Automobilbereich als auch im Bereich technischer Folien gibt es seit Jahren eine starke Tendenz, die weit verbreiteten PVC-Materialien durch halogenfreie Substanzen zu ersetzen. Eine weit verbreitete Materialklasse zur Substitution des PVC im Automobilinnenraum stellen Polyolefine dar. Durch geeignete Polymerisationstechniken ist man in der Lage, das Eigenschaftsprofil der Polyolefine in einem weiten Bereich zu variieren. So lassen sich durch gezielt eingestellte Polymerisationsvorgänge extrem steife und bis 150 °C temperaturstabile, hochkristalline Polypropylentypen herstellen. Durch Copolymerisation des Propylens mit anderen Monomeren lassen sich demgegenüber auch kautschukartige Polypropylene darstellen, deren Formbeständigkeit allerdings völlig unzureichend ist.

Die EP 1 149 858 befasst sich mit Dekorfolien auf Polyolefinbasis für Anwendungen im Automobilinterieur. Hierbei sind Kriterien wie Narbstabilität, Narbhomogenität nach dem Verformprozess, Haptik, Alterungsstabilität, Lichtechtheit, Emissionen und dergleichen von entscheidender Bedeutung. So beschreibt die EP 1 149 858 ein Verfahren zur Herstellung eines genarbten Formkörpers mit einem Gehalt an partiell vernetzten Polyolefinen und gegebenenfalls weiteren Additiven. Hierbei wird aus unvernetzten Polyolefinen und gegebenenfalls weiteren Additiven eine Folie hergestellt. Diese Folie wird geprägt und zum Erzielen einer im Tiefziehverfahren geeigneten Narbstabilität mit Elektronenstrahlen behandelt. Die behandelte Folie wird dann zu einem Formkörper mit genarbter Oberfläche tiefgezogen. In der EP 1 149 858 wird auch die Möglichkeit angesprochen, dass die unbestrahlte und bestrahlte Folie zu einem Verbundgebilde laminiert werden kann. Die bekannte Folie zeichnet sich dadurch aus, dass sie nach dem Prägen mit Elektronenstrahlen wünschenswert vernetzt und daraus eine hohe Narbstabilität nach dem Tiefziehverfahren erzielt wird. Die bekannte mehrlagige Folie ist besonders für die Kraftfahrzeuginnenverkleidung von Bedeutung.

Im Bereich der Automobilzulieferindustrie ist der Trend festzustellen, im Rahmen effizienterer Prozesse für die Darstellung von Kraftfahrzeuginnenteilen auch sogenannte Direktkaschierverfahren heranzuziehen. Unter Direktkaschierverfahren werden im Allgemeinen solche Verfahren verstanden, bei denen das Verkleidungsteil in einem Verfahrensschritt aus Dekorfolie und Trägermaterial ohne die Gegenwart eines Klebersystems hergestellt wird. Als Beispiele für diese Techniken können Presskaschierverfahren, das Strangablegeverfahren oder der Hinterspritzverfahren dienen. Derartige Verfahren werden unter anderem in der EP 0 968 806 A1, EP 0 730 947 B1, EP 0 650 828 B1 sowie DE 196 18 393 A1 beschrieben.

Anders als bei dem standardmäßig für die Herstellung von dekorierten Innenraumteilen von Kraftfahrzeugen angewandten Tiefziehverfahren zeichnen sich einige Direktkaschierverfahren dadurch aus, dass im Rahmen des Verformungsschrittes gleichzeitig über die Folienrückseite das Trägerteil gebildet wird. Im üblichen Tiefziehverfahren wird der drei dimensional vorgeformte Träger in einem separaten Fertigungsschritt zunächst in der gewünschten Kontur entsprechend gepresst oder gespritzt. Dieser Träger wird anschließend mit einem Kleber beschichtet. Beim Tiefziehverfahren reagiert der Kleber mit einem auf der Folienrückseite aufgebrachten Haftlack. Um die Aktivierung des Klebers sicherzustellen, ist es in Einzelfällen notwendig, eine definierte Aktivierungstemperatur für den Kleber zu überschreiten.

Beim Direktkaschierverfahren wird das auf eine bestimmte Temperatur vorgewärmte Trägermaterial mit der Folie in das formgebende Werkzeug gegeben. Im Rahmen eines Pressschrittes wird der trägergestütze genarbte Formkörper erhalten, wobei sowohl die Dekorfolie als auch gegebenenfalls der Träger ihre gewünschte dreidimensionale Form erhalten. Man erspart sich somit häufig die separate Herstellung des Trägers sowie den Kleberauftrag. Auch die Folie ist rückseitig nicht mehr mit einem Haftlack zu versehen. Weiterhin erspart man sich mit dem Direktkaschierverfahren aufgrund der abgestimmten Kombination von Dekorfolienmaterial und Trägermaterial das Problem der gelegentlich, insbesondere nach einer gewissen Alterungszeit, auftretenden unzureichenden Adhäsionskraft im Kleber, was zu Fehlteilen durch teilweises Ablösen der Folie vom Träger führen kann. Eine Besonderheit der Verformvorgänge nach dem Direktkaschier-Prinzip ist es üblicherweise, dass die Dekorseite des zu verformenden Dekormaterials, anders als beim Tiefziehprozess, im Rahmen des endgültigen Formgebungsschrittes nicht zwingend separat erwärmt wird. Dies hat zur Folge, dass sich bei Verwendung üblicher Folienzusammensetzungen, wie sie für Tiefziehanwendungen eingesetzt werden, Probleme dahingehend ergeben können, dass bei den dekorseitig herrschenden niedrigen Verfahrenstemperaturen die Dekorfolien nach dem Verformprozess im Bereich höherer Verstreckungsgrade weiße oder graue Bereiche aufweisen, was als "Weißbruch" bezeichnet wird. Um das Fehlerbild des Weißbruchs zu umgehen, versucht man üblicherweise dem Folienausgangsmaterial weiche Rezepturbestandteile beizugeben. Damit verschlechtert man allerdings die Wärmeformbeständigkeit, die Abriebresistenz und die Narbstabilität nach dem Verformen.

Um bei Dekorfolien ein angenehmes Griffempfinden oder eine gewünschte Berührhaptik zu generieren, wird die zu kaschierende Folie häufig rückseitig mit einem Schaum versehen. Neben der damit erreichbaren verbesserten Haptik hat der Schaum im Rahmen der Direktkaschierverfahren gleichzeitig noch eine Schutzfunktion für die Dekorfolie gegenüber dem rückseitig auf die Folie gepressten Trägermaterial. Der für diese Verfahren verwendete Schaum muss daher auch eine ausreichende thermische und mechanische Stabilität aufweisen, um nicht durch den Kontakt mit den bis zu 240 °C erwärmten Trägermaterialien großflächig zu kollabieren. Sofern dies geschieht, wird das Risiko, dass das Trägermaterial durch die Oberfolie tritt oder die Narbe unakzeptabel stark verflacht, signifikant erhöht.

Bei polyolefinischen Dekorfolien finden primär Polyolefinschäume, basierend auf Polyethylen und/oder Polypropylen, Anwendung. Diese Schäume werden üblicherweise bei ihrer Herstellung mit Elektronenstrahlen vernetzt. Es ist bekannt, dass insbesondere Polypropylen, aber auch Polyethylen, bei Einwirkung von Elektronenstrahlen zum Abbau neigen. Das Ausmaß des Abbaus steigt mit zunehmender Strahlendosis. Würde nun zur Verbesserung der Narbstabilität der Oberfolie eines Folienlaminats nach dem Prägen eine Elektronenstrahlenvernetzung in Betracht gezogen, so wäre anzunehmen, dass durch den Abbau der Polymere das mechanische Eigenschaftsniveau des Schaumes verschlechtert wird. Damit nimmt auch die sich aus dem Schaum ergebende Schutzfunktion für die Dekorfolie ab.

Ausgehend von dem vorstehend geschilderten Stand der Technik liegt der Erfindung die Aufgabe zugrunde, einen technischen Vorschlag zu unterbreiten, wie man den eingangs geschilderten Stand der Technik, insbesondere im Hinblick auf ein Schaumlaminat als Ausgangsprodukt, so weiterbildet, dass das Verfahrenserzeugnis, insbesondere trägergestützt, eine optimale Nutzung im Bereich der Kraftfahrzeuginnenverkleidung bietet. Insbesondere soll der trägergestützte, genarbte, mehrlagige Formkörper dieses Anwendungsbereiches eine zufriedenstellende Narbstabilität aufweisen und keinen Weißbruch zeigen. Ferner soll ein technischer Vorschlag unterbreitet werden, bei dem es in Weiterbildung des eingangs geschilderten Standes der Technik vermieden wird, dass bei Einsatz eines Schaumlaminats das mechanische Eigenschaftsprofil des Schaumes beeinträchtigt wird, wobei insbesondere kein Reißen und kein Verspröden der Schaumfolie in Erscheinung tritt.

Erfindungsgemäß wird diese Aufgabe einerseits gelöst durch ein Verfahren zur Herstellung eines genarbten mehrlagigen Formkörpers mit einer Oberfolie, die partiell vernetzte polymere Materialien, insbesondere auf Basis von Polyolefinen, und gegebenenfalls weitere Additive enthält, und mindestens einer darauf laminierten Unterfolie, wobei das mehrlagige Folienlaminat geprägt, zum Erzielen einer im Tiefziehprozess geeigneten Narbstabilität mit Elektronenstrahlen behandelt und das behandelte mehrlagige Folienlaminat zu einem genarbten, mehrlagigen Formkörper tiefgezogen wird, wobei mindestens eine Unterfolie mit einem geschäumten polymeren Material einer Dichte zwischen etwa 35 und 120 g/l und eines Gelgehaltes von weniger als 80%, insbesondere zwischen etwa 30 und 70%, ausgebildet wird.

Im Folgenden wird diese Lösung der zugrunde liegenden Aufgabe als Variante A) bezeichnet.

Im Rahmen der Erfindung werden polymere Ausgangsmaterialien eingesetzt, die insbesondere auf einen vorteilhaften Gelgehalt bzw. vorteilhaften Vernetzungsgrad vorher eingestellt worden sind. Dies bedeutet also, dass hier nicht unbedingt von einem unvernetzten polymeren Ausgangsmaterial ausgegangen wird. So ist es denkbar, dass von einem schwach vernetzten bzw. vorvernetztem Ausgangsmaterial, beispielsweise eines Gelgehaltes bis zu 15%, ausgegangen wird. Es ist im Allgemeinen von Vorteil, wenn die Vörvernetzung möglichst niedrig ist, beispielsweise der Gelgehalt weniger als etwa 10%, insbesondere weniger als etwa 5% beträgt.

Vorzugsweise sind die Polyolefine bei der Variante A vor der Vernetzung durch einen Schmelzflussindex MFI (230 °C, 2,16 kg) von etwa 0,1 bis 800 g/10 min, insbesondere etwa 0,1 bis 200 g/10 min, besonders bevorzugt etwa 0,1 bis 20 g/10 min charakterisiert.

In einer bevorzugten Ausführungsform ist der genarbte, mehrlagige Formkörper mit einem Träger versehen. Es werden besonders gute Ergebnisse erzielt, wenn der Träger bei der Herstellung des genarbten, mehrlagigen Formkörpers im Tiefziehprozess mit dem genarbten, mehrlagigen Folienlaminat verbunden wird. Die Verbindung des Trägers mit der als Schaumschicht ausgebildeten Unterfolie des mehrlagigen Folienlaminats erfolgt vorzugsweise über ein Klebesystem.

Das Spektrum der eingesetzten Polyolefine unterliegt keiner prinzipiellen Einschränkung. Vorzugsweise werden als Polyolefine verwendet: Polyolefine wie PP, PE, Poly(1-buten), Polyisobutylen, Poly(4-methylpenten), PP-Copolymere oder Terpolymere mit C₂, C₄-C₁₂-α-Olefinen, PE-Copolymere oder-Terpolymere mit C₃ bis C₁₂-α-Olefinen oder Mischungen daraus, wobei als Co- oder Termonomer auch Dien-Monomere eingesetzt werden können, die nicht-konjugierte Doppelbindungen enthalten, wie z.B. 1,4-Hexadien, 5-Methyl-1,5-Hexadien, 5-Ethyliden-2-Norbonen, 5-Butyliden-2-Norbonen, Dicyclopentadien, 1,4-Octadien, Cyclohexadien oder Cyclooctadien; Copolymere von Propylen und/oder Ethylen mit polaren Comonomeren wie Acrylsäure und/oder deren C₁-C₁₂-Estern, Methacrylsäure und/oder deren C₁-C₁₂-Estern, Ionomere auf Basis von Acrylsäure und/oder mit Methacrylsäure sowie Schwefelsäure, Vinylestern gesättigter C₂-C₈-Carbonsäuren, wahlweise mit Kohlenmonoxid als Termonomer; Pfropfcopolymere von Propylen und/oder Ethylen mit 8-45% aufgepfropften Einheiten von ungesättigten Carbonsäuren, Dicarbonsäuren, deren Estern und/oder Anhydriden sowie Gemische der genannten Polymere. Besonders bevorzugt werden Polypropylen, Polyethylen, Polypropylen-Copolymere oder -Terpolymere mit C₂, C₄-C₁₂-α-Olefinen und/oder Polyethylen-Copolymere oder-Terpolymere mit C₃-C₁₂-α-Olefinen verwendet.

In einer bevorzugten Ausführungsform werden als polymeres Ausgangsmaterial, insbesondere in unvernetzter Form, Polyolefine, insbesondere Polypropylen und/oder Polyethylen sowie deren Copolymeren und Terpolymeren vernetzt.

Bei der Vernetzung wird vorzugsweise ein Vernetzungshilfsmittel eingesetzt, insbesondere in der Oberfolie. Dies gilt insbesondere für Polyolefine, bei denen die Kettenspaltung, die als Konkurrenzreaktion zur Vernetzung abläuft, eine merkliche Auswirkung zeigt. Betroffen sind insbesondere Polyolefine mit tertiären und quartären C-Atomen. Verwendung als Vernetzungshilfsmittel finden insbesondere ein- oder mehrfach ungesättigte Verbindungen, wie Acrylate von 1- oder mehrwertigen Alkoholen, so z.B. Trimethylolpropantriacrylat, Methacrylate von 1- oder mehrwertigen Alkoholen, so z.B. Trimethylolpropantrimethacrylat, vinylfunktionelle Komponenten, wie Styrol und Divinylbenzol, AllylVerbindungen, wie Triallylcyanurat, Triallylisocyanat. Besonders gute Ergebnisse werden bei Verwendung von Trimethylolpropantriacrylat, Trimethylolpropantrimethacrylat, Triallylcyan-urat, Divinylbenzol, Ethylenglycoldimethacrylat, Diethylenglykoldimethacrylat und/oder Polyethylenglykoldimethacrylat. Dabei hat es sich als vorteilhaft erwiesen, die Menge an eingesetztem Vernetzungshilfsmittel in der jeweiligen Folienlage bei weniger als etwa 10 Gew.-%, insbesondere bei weniger als etwa 5 Gew.-% zu halten.

Des Weiteren ist es bevorzugt, dass ein oder mehrere der Folienlagen zusätzlich zu dem oben erwähnten Vernetzungshilfsmittel noch weitere Additive enthält, insbesondere Antioxidantien, Lichtschutzmittel, Alterungsschutzmittel, Gleitmittel und/oder Pigmente, wobei diese insbesondere in einer Menge von etwa 10 Gew.-% eingesetzt werden. Als besonders vorteilhaft hat es sich erwiesen, als Antioxidantien Phenolderivate, Lactone und/oder Phosphite und als Lichtschutzmittel sterisch gehinderte Amine in einer Menge von weniger als etwa 5 Gew.-%, vorzugsweise bis zu 3,5 Gew.-%, insbesondere von 0,2 bis 2,5 Gew.-%, bezogen auf das Gewicht der Masse, einzusetzen.

Das Vernetzen mit Elektrodenstrahlen erfolgt bevorzugt mit einer Bestrahlungsdosis von etwa 20 bis 150 KGy, insbesondere von etwa 30 bis 100 KGy. Erfindungsgemäß ist es bevorzugt, dass durch diese Bestrahlung in der Oberfolie ein Gelgehalt von in etwa 20 bis 70%, insbesondere in etwa 25 bis 60%, eingestellt wird. Die Shore Härte D (gemäß DIN 53505) der Oberfolie wird vorzugsweise auf weniger als etwa 40, insbesondere auf weniger als etwa 35, eingestellt.

Es hat sich als vorteilhaft erwiesen, das Verfahren so auszubilden, dass das genarbte Folienlaminat im Rahmen eines einzigen Verfahrensschrittes gebildet wird, bei dem auf einer Oberfläche eine geschäumte Unterfolie laminiert und gleichzeitig die Oberfolie geprägt wird und anschließend das erhaltene Folienlaminat einer Elektronenstrahlbehandlung ausgesetzt wird.

Neben der vorangehend beschriebenen Variante A) stellt die Erfindung als weitere Lösung der zugrundeliegenden Aufgabe ein Verfahren zur Herstellung eines genarbten, mehrlagigen Formkörpers bereit, mit einer Oberfolie, die partiell vernetzte polymere Materialien, insbesondere auf Basis von Polyolefinen, und gegebenenfalls weitere Additive enthält, und mindestens einer darauf laminierten Unterfolie, wobei das mehrlagige Folienlaminat mit Elektronenstrahlen behandelt und das behandelte genarbte, mehrlagige Folienlaminat zu einem Formkörper weiterverarbeitet wird, wobei in einem einzigen Verfahrensgang und unter weitgehendem Ausschluss eines Vakuums, insbesondere unter weitgehendem Ausschluß eines Klebersystems, der trägergestützte genarbte, mehrlagige Formkörper dadurch gebildet wird, dass (1) ein in seiner räumlichen Struktur vorgefertigter Träger oberflächlich erwärmt und auf die rückseitig erwärmte Seite des bestrahlten, genarbten, mehrlagigen Folienlaminats gepresst wird oder (2) ein sich in plastischem Zustand befindendes Ausgangsmaterial des Trägers in einem Werkzeug mit der Rückseite des bestrahlten, genarbten, mehrlagigen Folienlaminats verbunden wird.

Im Folgenden wird diese Lösung der zugrundeliegenden Aufgabe als Variante B) bezeichnet.

Es hat sich als vorteilhaft erwiesen, das Verfahren so auszubilden, dass die Oberfolie des Formkörpers aufgebaut ist aus a) etwa 5 bis 30 Gew.-% eines Polypropylens oder einer Mischung von Polypropylenen mit einem Schmelzpunkt von mehr als 120 °C, insbesondere mehr als 130 °C, wobei das Polypropylen bzw. die Mischung des Polypropylens nicht mehr als 20 Gew.-% eines Block- oder Homopolymerisates enthält; b) etwa 70 bis 95 Gew.-% eines Ethylencopolymeren oder eine Mischung mehrerer Ethylencopolymeren mit einem Schmelzpunkt von jeweils weniger als etwa 110 °C, insbesondere weniger als etwa 100 °C, und wobei das Material der Oberfolie einen Gelgehalt von etwa 20 bis 70%, insbesondere etwa 30 bis 65%, aufweist. Besonders gute Ergebnisse werden erzielt, wenn der Gehalt an Block- oder Homopolymeren weniger als etwas 10 Gew.-%, insbesondere weniger als etwa 5 Gew.-%, beträgt.

In einer bevorzugten Ausführungsform wird bei der Ausbildung der Oberfolie ein EthylenCopolymer herangezogen, das als Comonomer oder Termonomer Acrylsäure, Methacrylsäure, Schwefelsäure oder deren Ionomere enthält. Es hat sich als vorteilhaft erwiesen, das Verfahren so auszubilden, dass die Unterfolie aus einem kompakten Material besteht, dessen Dichte nicht mehr als 10% von der darüberliegenden Schicht, insbesondere der Oberfolie, abweicht. Bevorzugt ist die Unterfolie aus einem Polyolefinschaum, insbesondere auf der Basis von Polyethylen und/oder Polypropylen, aufgebaut. Die Unterfolie kann aus vielfältigen Materialien, die im vorliegenden technischen Bereich geeignet sind, aufgebaut sein. So kann sie beispielswiese eine Vliesstruktur aufweisen. In Einzelfällen kann dies auch eine besonders bevorzugte Variante sein. Vorzugsweise besteht das Vlies aus Polyethylen und/oder Polypropylen.

Weitere vorteilhafte Ausführungsformen des Verfahrens gemäß der Variante B) sind solche, bei denen die Verfahrensmerkmale, die eingesetzten Substanzen und/oder deren Mengen denen entsprechen, wie sie bereits bei den bevorzugten Ausführungsformen gemäß dem Verfahren nach der Variante A) beschrieben sind. Da beiden Verfahrensvarianten der gemeinsame Erfindungsgedanke zugrunde liegt, ein Folienlaminat zu einem trägergestützten Formkörper zu verarbeiten, sind die Angaben bezüglich der bevorzugten Ausführungsformen des Verfahrens gemäß der Variante A) auch auf das Verfahren gemäß der Variante B) übertragbar. Um Wiederholungen zu vermeiden, wird auf die diesbezügliche Beschreibung zu den bevorzugten Ausführungsformen des Verfahrens gemäß der Variante A) verwiesen.

Die Erfindung betrifft auch einen trägergestützten, genarbten, mehrlagigen Formkörper mit einer Oberfolie auf der Basis eines vernetzten polymeren Materials, insbesondere Polyolefins, und gegebenenfalls weiterer Additive mit einem Gelgehalt von 20 bis 70 Gew.-%, insbesondere 25 bis 60 Gew.-%, mit guter Narbstabilität sowie mit matter Oberfläche, der nach mindestens einem der vorhergehend beschriebenen Verfahren hergestellt ist. Ferner betrifft die Erfindung auch die Verwendung eines solchen trägergestützten, genarbten, mehrlagigen Formkörpers zur Innenverkleidung von Kraftfahrzeugen.

Die mit der Erfindung erzielbaren Vorteile lassen sich umfassend wie folgt darstellen: Zunächst sei hier eingegangen auf die Variante A). Hierbei stellen sich nun vielfältige Vorteile dar:

Die nach dem erfindungsgemäßen Verfahren hergestellten mehrlagigen und genarbten Folien bzw. hergestellten Verbundgebilde und Formkörper mit einer geschäumten Unterfolie weisen eine sehr angenehme Haptik und Weichheit auf, wie sie im Automobilinterieur gefordert wird. Des Weiteren wird durch die erfindungsgemäße Ausbildung eine hohe Narbstabilität nach dem Tiefziehprozess erreicht. Das für den Tiefziehprozess zur Verfügung stehende Verarbeitungsfenster wird hinsichtlich der Prozesstemperaturen um etwa 20 °C erweitert. Es hat sich gezeigt, dass bei der Weiterverarbeitung im Tiefziehverfahren besonders vorteilhafte Eigenschaften erhalten werden. Bei bekannten Tiefziehverfahren werden nicht selten Bereiche der tiefgezogenen Folie in ihrer Homogenität gestört bzw. sogar aufgerissen. Diese nachteiligen Erscheinungen werden erfindungsgemäß weitgehend ausgeschlossen. Schließlich wird das Aufglänzen der Oberfläche erfindungsgemäß erhaltener Folien signifikant reduziert.

Die erfindungsgemäßen Folien weisen daneben eine gute Prägbarkeit und Laminierbarkeit auf.

In Verbindung mit der erfindungsgemäßen Variante B) hat es sich gezeigt, dass deren Vorteile wie folgt darzustellen sind:

Die nach dem erfindungsgemäßen Verfahren B) hergestellten mehrlagigen und genarbten Folien und die daraus hergestellten Verbundgebilde und Formkörper zeichnen sich insbesondere durch ihre Nutzbarkeit für Innenverkleidungen in Kraftfahrzeugen, insbesondere für Instrumententafeln und Türseitenverkleidungen aus, wo neben einer hohen Narbstabilität auch eine weiche Eindruckhaptik gefordert ist. Die erfindungsgemäßen Folien weisen insbesondere bei Verarbeitungsverfahren, die dekorseitig niedrige Prozesstemperaturen, die unterhalb 120 °C, vorzugsweise unterhalb 100 °C liegen, benötigen, den besonderen Vorteil auf, dass sie keinen Weißbruch zeigen. Des Weiteren sind die Folien bzw. Formkörper in einer bevorzugten Ausführungsart derart gestaltet, dass die schaumartig ausgebildete Unterfolie nach dem erfolgten Vernetzungsschritt weiterhin derart flexibel ist, dass selbst bei niedrigen Temperaturen die kundenseitig geforderte Resistenz gegenüber stoßartigen Belastungen erfüllt wird. Des Weiteren werden in einer bevorzugten Ausbildung die Abriebeigenschaften aktueller, für dieses Verarbeitungsverfahren konzipierter Folienformulierungen deutlich verbessert, wobei das Auftreten des Weißbruchs weiterhin ausgeschlossen ist und ein sehr guter Narbausfall hinsichtlich Narbprägnanz und Narbhomogenität erreicht wird.

Die Erfindung wird nachfolgend anhand von Beispielen noch näher erläutert.

### Beispiele 1 bis 3 sowie Vergleichsbeispiele 1 bis 3

### Methoden zur Bestimmung der physikalischen Daten

### Bestimmung des Gelgehalts:

Die Gelgehalte werden über die im Folgenden beschriebene Extraktionsmethode erhalten. Die Proben werden bei einer Dicke von etwa 0,5 mm in Quadrate einer Kantenlänge von etwa 1,0 mm geschnitten. Die Proben (etwa 100 mg) werden dann in Reagenzgläsern vorgelegt, welche mit Propfen aus rostfreiem Stacheldraht versehen sind, die ein Aufschwimmen der Proben verhindern. Die Reagenzgläser werden mit 100 ml Xylol gefüllt und mit Alufolie verschlossen, um ein Abdampfen des Lösungsmittels zu verhindern. Das Xylol wird dann zum Sieden erhitzt. Die Probekörper lässt man etwa 24 h im siedenden Xylol. Anschließend wird das Gel-Xylol-Gemisch über eine Siebtrommel mit einer Maschenweite von 200 mesh filtriert, wobei das Gel in der Siebtrommel verbleibt. Die Siebtrommeln werden auf Metallplatten gestellt und bei 140 °C für 3 h im Umluftofen getrocknet. Nach Abkühlen auf Raumtemperatur wird der Gehalt ausgewogen und zur Einwage ins Verhältnis gesetzt.

### Bestimmung der Kratzfestigkeit:

Hierbei wird ein Rad mit einem Durchmesser von 8 mm, einer Stärke von 1 mm und eine Härte Shore D 85 mit einer Geschwindigkeit von 20 cm/s über eine Strecke von mindestens 20 cm mit einer Belastung von 25 N geführt. Die Folie darf nur eine schwache Schreibwirkung aufweisen und die irreversible Schädigung der Folie ist nicht zulässig.

### Bestimmung der Härte nach Shore erfolgt gemäß DIN 53505.

### Kältebeständigkeit nach der Kugelfallmethode (VDA237-101 Anhang 3):

Nach einer 22-stündigen Lagerung der Folie bei -35 °C wird eine Kugel mit einer Masse von 500 g aus einer Höhe von 230 mm auf die Folie fallen gelassen. Hierbei darf es weder zu einer Beschädigung der kompakten Ober- noch der geschäumten Unterfolie kommen.

### Wärmelagerung nach DIN 53377:

Proben einer Größe von 100 x 100 mm² werden 24 Stunden bei 120 °C gelagert. Beurteilt wird anschließend die Veränderung der Oberfläche hinsichtlich Glanz und Erscheinungsbild der Narbe.

### Bestimmung der Tiefzieheigenschaften

Die mehrlagige, geprägte Verbundfolie wird in einer Tiefziehmaschine eingelegt und bei den genannten Temperaturen über eine kleine Dachform tiefgezogen. Beurteilt wird an dem erhaltenen Formkörper der Glanz und das erhaltenen Narbbild.

### Bestimmung der Kaltverformbarkeit

Die zu prüfende mehrlagige, geprägte Verbundfolie wird bei Raumtemperatur über einen Dorn gezogen. Geprüft wird dabei, ob sich die Oberfläche während dieses Prozesse weiß oder grau verfärbt.

### Musterherstellung:

Die in der folgenden Tabelle 1 formulierten Zusammensetzungen wurden auf einem Zweischneckenextruder (ZSK 25 4D 28) zu Folien der Dicke 0,5 mm extrudiert. Die Zylinder- und Düsentemperaturen wurden gemäß den Angaben der Tabelle 2 eingestellt.

**Tabelle 1**

| (Folienzusammensetzungen) | | | | | | |
|---|---|---|---|---|---|---|
| | Vergleichsbeispiel 1 | Vergleichsbeispiel2 | Vergleichsbeispiel 3 | Beispiel 1 | Beispiel 2 | Beispiel 3 |
| | | | | | | |
| TPE-V 1 | 30 | | 15 | | | |
| TPE-V 2 | 30 | 35 | 60 | | | |
| r-PP | 10 | 25 | | 30 | 20 | |
| LLDPE | 10 | 15 | 25 | 20 | 20 | |
| VLDPE | 20 | 25 | | 20 | 20 | 25 |
| EPDM | | | | 30 | 30 | |
| ECOPO | | | | | 10 | |
| Pigment | 1 | 1 | 1 | 1 | 1 | 1 |
| Covernetzer | | | | | 0,5 | |
| TPO | | | | | | 75 |

| | | | | | | |
|---|---|---|---|---|---|---|
| **TPE-V 1**: Thermoplastisches Elastomer, Shorehärte A 50, MFI 22g/10min (230°C, 10 kg) **TPE-V 2**: Thermoplastisches Elastomer, Shorehärte A 82, MFI 15g/10min (230°C, 10 kg) **r-PP:** Random Copolymeres Polypropylen, Dichte 0,90 g/ml, MFI 1g/10min (230°C, 2,16 kg) **LLDPE**: Linear low density Polyethylen, Dichte 0,92 g/ml, MFI 1g/10 min (190°C, 2,16 kg) **VLDPE:** Very low density Polyethylen Dichte 0,87 g/ml, MFI 1g/10 min (190°C, 2,16 kg) **EPDM**: Ethylen-Propylen-Dien-Mischpolymer, Dichte 0,89 g/ml, Diengehalt ca. 1 Gew.% **ECOPO:** Ethylencopolymer, Dichte 0,94 g/ml, Gehalt an Acrylsäure ca. 9 Gew.%, MFI 1.5 g/10min (190°C, 2,16 kg) **Pigment:** Ruß **Covernetzer:** Triallylcyanurat **TPO**: Thermoplastisches Elastomer (unvernetzt), Dichte 0,89 g/ml, MFI 1g/10min (230°C, 2,16 kg) | | | | | | |

**Tabelle 2**

| (Zylinder- und Düsentemperaturen in °C bei der Folienextrusion) | | | | | | |
|---|---|---|---|---|---|---|
| | Zone 1 | Zone 2 | Zone 3 | Zone 4 | Zone 5 | Zone 6 |
| Zylinder | 180 | 175 | 180 | 195 | 205 | --- |
| Düse | 210 | 210 | 210 | 210 | 210 | 210 |

Anschließend werden die Folien mit einem ca. 10 µm starken PUR-Lack beschichtet und danach im Rahmen eines Prägevorgangs in einer mit 200°C beheizten Presse bei einem Druck von 10 bar mit einem Polypropylen-Tiefziehschaum (Dichte 67g/l, Dicke 2,0 mm) kaschiert. Der Pressschritt umfasst einen Zeitraum von ca. 2 min.

Die erhaltenen Muster werden, abgesehen von den Vergleichsbeispielen 1 und 2, anschließend mit den in Tabelle 3 beschriebenen Dosen in einem Elektronenstrahlvernetzer bestrahlt.

**Tabelle 3**

| (Vernetzungsdosen) | | | | | | |
|---|---|---|---|---|---|---|
| | Vergleichsbeispiel 1 | Vergleichsbeispiel 2 | Vergleichsbeispiel 3 | Beispiel 1 | Beispiel 2 | Beispiel 3 |
| Dosis [kGy] | 0 | 0 | 0 | 100 | 75 | 75 |

Mit den so erhaltenen Mustern wurden folgende Prüfresultate erhalten:

**Tabelle 4**

| (Prüfresultate) | | | | | | |
|---|---|---|---|---|---|---|
| | Vergleichsbeispiel 1 | Vergleichsbeispiel2 | Vergleichsbeispiel 3 | Beispiel 1 | Beispiel 2 | Beispiel 3 |
| | | | | | | |
| Shore Härte D | 21 | 38 | 28 | 33 | 40 | 30 |
| Gelgehalt Folie | < 5% | <5% | 10 | 35 | 42 | 38 |
| Kugelfalltest | i.O. | i.O. | i.O. | i.O. | i.O. | i.O. |
| Kratzfestigkeit Erichsen 318 | | | | | | |
| 15 N | n.i.O. | i.O. | n.b. | i.O. | i.O. | n.b. |
| 25 N | n.i.O. | n.i.O. | n.b. | i.O. | i.O. | n.b. |
| Wärmelagerung 24 h, 120°C | n.i.O., Aufglänzen, Narbverlust | i.O. | i.O. | i.O. | i.O. | i.O. |
| Tiefziehen Tᵥₒᵣ = 150°C, T_{rück} = 200°C | n.i.O. Narbverflachung, Aufglänzen | n.i.O. Aufweitung der Narbtäler | Narbverflachung, Aufglänzen | Prägnante Narbe, kein Aufglänzen | Prägnante Narbe, kein Aufglänzen | Prägnante Narbe, kein Aufglänzen |
| Kaltverformbarkeit | i.O. | n.i.O. Weißbruch | .n.b. | i.O. | i.O. | n.b. |

| | | | | | | |
|---|---|---|---|---|---|---|
| n.b. = nicht bestimmt Anmerkung: i.O.= "gut" n.i.O. = "nicht ausreichend" | | | | | | |

Die Vergleichsbeispiele und die erfindungsgemäßen Beispiele werden im folgenden näher erläutert:

Die Vergleichsbeispiele 1 und 2 sowie die Beispiele 1 und 2 beziehen sich auf das Verfahren B, das Vergleichsbeispiel 3 und das Beispiel 3 auf das Verfahren A.

Das Vergleichsbeispiel 1 beschreibt eine mehrlagige geprägte Folie mit einer Schaumunterfolie, die für das Direktkaschierverfahren geeignet ist. Sie zeichnet sich insbesondere durch eine gute Kaltverformbarkeit (kein Weißbruch) aus, hat aber erhebliche Nachteile in der Wärmelagerung bei 120°C sowie in der Abriebbeständigkeit.

Das Vergleichsbeispiel 2 beschreibt eine mehrlagige geprägte Folie mit einer Schaumunterfolie, die im Gegensatz zum Vergleichsbeispiel 1 deutlich bessere Abriebseigenschaften aufweist, aber eine unzureichende Kaltverformbarkeit aufweist, was sich im Auftreten von Weißbruch bei einer Verformung bei Raumtemperatur bemerkbar macht.

Die erfindungsgemäßen Beispiele 1 und 2 kombinieren eine sehr gute Kaltverformbarkeit mit günstigen Tiefzieheigenschaften, günstigen Wärmelagerungseigenschaften und verbesserten Kratzbeständigkeiten.

Das Vergleichsbeispiel 3 beschreibt eine mehrlagige geprägte Folie mit einer Schaumunterfolie, die eine unzureichende Narbstabilität aufweist.

Das erfindungsgemäße Beispiel 3 beschreibt eine mehrlagige geprägte Folie mit einer Schaumunterfolie, die sehr gute Narbbeständigkeit nach dem Tiefziehprozess aufweist.

## Patentansprüche

1. Verfahren zur Herstellung eines genarbten, mehrlagigen Formkörpers mit einer Oberfolie, die partiell vernetzte polymere Materialien, und gegebenenfalls weitere Additive enthält, und mindestens einer darauf laminierten Unterfolie, wobei das mehrlagige Folienlaminat geprägt, zum Erzielen einer im Tiefziehprozess geeigneten Narbstabilität mit Elektronenstrahlen behandelt und das behandelte mehrlagige Folienlaminat zu einem genarbten, mehrlagigen Formkörper tiefgezogen wird, **dadurch gekennzeichnet, dass** mindestens eine Unterfolie mit einem geschäumten polymeren Material einer Dichte zwischen 35 und 120 g/l und eines Gelgehaltes von weniger als 80% ausgebildet wird.

2. Verfahren nach Anspruch 1, **dadurch gekennzeichnet, dass** mindestens eine Unterfolie mit einem geschäumten polymeren Material eines Gelgehaltes zwischen 30 und 70% ausgebildet wird.

3. Verfahren nach Anspruch 1 oder 2, **dadurch gekennzeichnet, dass** der genarbte, mehrlagige Formkörper mit einem Träger versehen wird.

4. Verfahren nach Anspruch 2 bis 3, **dadurch gekennzeichnet, dass** der Träger bei der Herstellung des genarbten mehrlagigen Formkörpers im Tiefziehprozess mit dem genarbten, mehrlagigen Folienlaminat verbunden wird.

5. Verfahren nach Anspruch 4, **dadurch gekennzeichnet, dass** die Verbindung des Trägers mit der als Schaumschicht ausgebildeten Unterfolie des mehrlagigen Folienlaminats über ein Klebersystem erfolgt.

6. Verfahren zur Herstellung eines genarbten, mehrlagigen Formkörpers mit einer Oberfolie, die partiell vernetzte polymere Materialien und gegebenenfalls weitere Additive enthält, und mindestens einer darauf laminierten Unterfolie, wobei das mehrlagige Follenlaminat mit Elektronenstrahlen behandelt und das behandelte genarbte, mehrlagige Folienlaminat zu einem Formkörper weiterverarbeitet wird, **dadurch gekennzeichnet, dass** in einem einzigen Verfahrensgang und unter weitgehendem Ausschluss eines Vakuums, insbesondere unter weitgehendem Ausschluß eines Klebersystems, der trägergestützte genarbte, mehrlagige Formkörper dadurch gebildet wird, dass
(1) ein in seiner räumlichen Struktur vorgefertigter Träger oberflächlich erwärmt und auf die rückseitig erwärmte Seite des bestrahlten, genarbten, mehrlagigen Folienlaminats gepresst wird oder
(2) ein sich in plastischem Zustand befindendes Ausgangsmaterial des Trägers in einem Werkzeug mit der Rückseite des bestrahlten, genarbten, mehrlagigen Folienlaminats verbunden wird.

7. Verfahren nach mindestens einem der vorhergehenden Ansprüche, **dadurch gekennzeichnet, dass** als polymeres Ausgangsmaterial Polyolefine vernetzt werden.

8. Verfahren nach Anspruch 7, **dadurch gekennzeichnet, dass** als polymeres Ausgangsmaterial Polyolefine in unvernetzter Form vernetzt werden.

9. Verfahren nach Anspruch 8, **dadurch gekennzeichnet, dass** als polymeres Ausgangsmaterial Polypropylen und/oder Polyethylen sowie deren Copolymeren und Terpolymeren vernetzt werden.

10. Verfahren nach Anspruch 6 bis 9, **dadurch gekennzeichnet, dass** die Oberfolie des Formkörpers aufgebaut ist aus
a) 5 bis 30 Gew.-% eines Polypropylens oder einer Mischung von Polypropylenen mit einem Schmelzpunkt von mehr als 120 °C, insbesondere mehr als 130 °C, wobei das Polypropylen bzw. die Mischung des Polypropylens nicht mehr als 20 Gew.-% eines Block- oder Homopolymerisates enthält;
b) 70 bis 95 Gew.-% eines Ethylencopolymeren oder eine Mischung mehrerer Ethylencopolymeren mit einem Schmelzpunkt von jeweils weniger als 110 °C, und wobei das Material der Oberfolie einen Gelgehalt von etwa 20 bis 70% aufweist.

11. Verfahren nach Anspruch 19, **dadurch gekennzeichnet, dass** der Gehalt an Block- oder Homopolymeren weniger als 10 Gew.-% beträgt.

12. Verfahren nach mindestens einem der vorhergehenden Ansprüche 7 bis 11, **dadurch gekennzeichnet, dass** bei der Ausbildung der Oberfolie ein EthylenCopolymer herangezogen wird, das als Comonomer oder Termonomer Acrylsäure, Methacrylsäure, aufgepfropfte Schwefelsäure oder deren Ionomere enthält.

13. Verfahren nach mindestens einem der vorhergehenden Ansprüche 6 bis 12, **dadurch gekennzeichnet, dass** die Unterfolie aus einem kompakten Material besteht, dessen Dichte nicht mehr als 10% von der darüberliegenden Schicht abweicht.

14. Verfahren nach mindestens einem der Ansprüche 6 bis 13, **dadurch gekennzeichnet, dass** die Unterfolie aus einem Polyolefinschaum oder aus einem Vlies aufgebaut ist.

15. Verfahren nach mindestens einem der vorhergehenden Ansprüche, **dadurch gekennzeichnet, dass** bei der Vernetzung ein Vernetzungshilfsmittel eingesetzt wird.

16. Verfahren nach Anspruch 15, **dadurch gekennzeichnet, dass** das Vernetzungshilfsmittel Trimethylolpropantriacrylat, Trimethylolpropantrimethacrylat, Triallylcyanurat, Divinylbenzol, Ethylenglycoldimethacrylat, Diethylenglykoldimethacrylat und/oder Polyethylenglykoldimethacrylat eingesetzt wird.

17. Verfahren nach Anspruch 15 oder 16, **dadurch gekennzeichnet, dass** die Menge an Vernetzungshilfsmittel in der jeweiligen Folienlage weniger als 10 Gew.-% beträgt.

18. Verfahren nach mindestens einem der vorhergehenden Ansprüche, **dadurch gekennzeichnet, dass** in eine oder mehrere der Folienlagen zusätzlich Additive einverleibt sind.

19. Verfahren nach Anspruch 18, **dadurch gekennzeichnet, dass** in als zusätzlich Additive Antioxidantien, Lichtschutzmittel, Gleitmittel und/oder Pigmente einverleibt sind.

20. Verfahren nach Anspruch 18 oder 19, **dadurch gekennzeichnet, dass** als Antioxidantien Phenol-Derivate, Lactone und/oder Phosphite und als Lichtschutzmittel sterisch gehinderte Amine in einer Menge von weniger als 5 Gew.-% eingesetzt werden.

21. Verfahren nach mindestens einem der vorhergehenden Ansprüche, **dadurch gekennzeichnet, dass** das Vernetzen mit Elektrodenstrahlen einer Bestrahlungsdosis von 20 bis 150 KGy, durchgeführt wird.

22. Verfahren nach Anspruch 21, **dadurch gekennzeichnet, dass** durch das Bestrahlen in der Oberfolie ein Gelgehalt von 20 bis 70% eingestellt wird.

23. Verfahren nach mindestens einem der vorhergehenden Ansprüche, **dadurch gekennzeichnet, dass** die Shore Härte D (gemäß DIN 53505) der Oberfolie auf weniger als 40 eingestellt wird.

24. Verfahren nach mindestens einem der vorhergehenden Ansprüche, **dadurch gekennzeichnet, dass** das genarbte Folienlaminat im Rahmen eines einzigen Verfahrensschrittes gebildet wird, bei dem auf eine Oberfolie eine geschäumte Unterfolie laminiert und gleichzeitig die Oberfolie geprägt wird und anschließend das erhaltene Folienlaminat einer Elektronenstrahlenbehandlung ausgesetzt wird.

25. Trägergestützter, genarbter, mehrlagiger Formkörper mit einer Oberfolie auf der Basis eines vernetzten polymeren Materials und gegebenenfalls weiterer Additive mit einem Gelgehalt von 20 bis 70 Gew.-%, insbesondere 25 bis 60 Gew.-%, mit guter Narbstabilität sowie mit matter Oberfläche, erhalten nach einem Verfahren gemäß mindestens einem der vorhergehenden Ansprüche 1 bis 24.

26. Verwendung des trägergestützten, genarbten, mehrlagigen Formkörpers nach Anspruch 25 zur Innenverkleidung von Kraftfahrzeugen.

## Claims

1. Process for production of a grained, multilayer moulding with a top foil which comprises partially crosslinked polymeric materials, and, if appropriate, comprises further additives, and with at least one underlying foil laminated thereto, where the multilayer foil laminate is embossed, and treated with electron beams so that its stability of grain is suitable for the thermoforming process, and the treated multilayer foil laminate is thermoformed to give a grained, multilayer moulding, **characterized in that** at least one underlying foil is formed with a foamed polymeric material whose density is from 35 to 120 g/l and whose gel content is less than 80%.

2. Process according to Claim 1, **characterized in that** at least one underlying foil is formed with a foamed polymeric material whose gel content is from 30 to 70%.

3. Process according to Claim 1 or 2, **characterized in that** the grained, multilayer moulding is provided with a backing.

4. Process according to Claim 2 or 3, **characterized in that** the backing is bonded to the grained, multilayer foil laminate during production of the grained multilayer moulding in the thermoforming process.

5. Process according to Claim 4, **characterized in that** an adhesive system is used for bonding of the backing to the underlying foil formed as foam layer in the multilayer foil laminate.

6. Process for production of a grained, multilayer moulding with a top foil which comprises partially crosslinked polymeric materials, and, if appropriate, comprises further additives, and with at least one underlying foil laminated thereto, where the multilayer film laminate is treated with electron beams and the treated grained, multilayer foil laminate is further processed to give a moulding, **characterized in that** the grained, multilayer moulding being supported by a backing is formed in a single process pass and with substantial exclusion of a vacuum, and in particular with substantial exclusion of an adhesive system, by
(1) heating the surface of a backing whose three-dimensional structure has been prefabricated, and pressing the backing onto the reverse-side-heated side of the irradiated, grained, multilayer foil laminate, or
(2) bonding, in a mould, a starting material which is in plastic condition and is intended for the backing to the reverse side of the irradiated, grained, multilayer foil laminate.

7. Process according to any of the preceding claims, **characterized in that** the polymeric starting material crosslinked comprises polyolefins.

8. Process according to Claim 7, **characterized in that** the polymeric starting material crosslinked comprises uncrosslinked polyolefins.

9. Process according to Claim 8, **characterized in that** the polymeric starting material crosslinked comprises polypropylene and/or polyethylene, or else their copolymers and terpolymers.

10. Process according to any of Claims 6 to 9, **characterized in that** the top foil of the moulding is composed of
a) from 5 to 30% by weight of a polypropylene or of a mixture of polypropylenes whose melting point is above 120°C, in particular above 130°C, where the polypropylene or the polypropylene mixture does not comprise more than 20% by weight of a block polymer or homopolymer;
b) from 70 to 95% by weight of an ethylene copolymer or a mixture of a plurality of ethylene copolymers whose melting point is in each case below 110°C, where the gel content of the material of the top foil is from about 20 to 70%.

11. Process according to Claim 19, **characterized in that** the content of block polymer or homopolymer is less than 10% by weight.

12. Process according to at least one of the preceding Claims 7 to 11, **characterized in that** during formation of the top foil an ethylene copolymer is used which comprises, as comonomer or termonomer, acrylic acid, methacrylic acid, grafted sulphuric acid or ionomers thereof.

13. Process according to at least one of the preceding Claims 6 to 12, **characterized in that** the underlying foil is composed of a compact material whose density is not more than 10% different from that of the layer located thereabove.

14. Process according to at least one of Claims 6 to 13, **characterized in that** the underlying foil is composed of a polyolefin foam or of a nonwoven.

15. Process according to any of the preceding claims, **characterized in that** a crosslinking aid is used during the crosslinking process.

16. Process according to Claim 15, **characterized in that** the crosslinking aid used comprises trimethylolpropane triacrylate, trimethylolpropane trimethacrylate, triallyl cyanurate, divinylbenzene, ethylene glycol dimethacrylate, diethylene glycol dimethacrylate and/or polyethylene glycol dimethacrylate.

17. Process according to Claim 15 or 16, **characterized in that** the amount of crosslinking aid in the respective foil layer is less than 10% by weight.

18. Process according to at least one of the preceding claims, **characterized in that** additives have also been incorporated into one or more of the foil layers.

19. Process according to Claim 18, **characterized in that** additives also incorporated comprise antioxidants, light stabilizers, lubricants and/or pigments.

20. Process according to Claim 18 or 19, **characterized in that** antioxidants used comprise phenol derivatives, lactones and/or phosphites, and light stabilizers used comprise sterically hindered amines, their amount being less than 5% by weight.

21. Process according to at least one of the preceding claims, **characterized in that** the crosslinking process is carried out with electron beams giving a radiation dose of from 20 to 150 kGy.

22. Process according to Claim 21, **characterized in that** gel content of from 20 to 70% by weight is established in the top foil via the irradiation process.

23. Process according to at least one of the preceding claims, **characterized in that** the Shore D hardness (to DIN 53505) over the top foil is adjusted to less than 40.

24. Process according to at least one of the preceding claims, **characterized in that** the grained foil laminate is formed within a single step of a process, by laminating a foamed underlying foil to an top foil and simultaneously embossing the top foil and then exposing the resultant foil laminate to electron beam treatment.

25. Grained, multilayer moulding supported by a backing and having an top foil based on a crosslinked polymeric material and, if appropriate, on further additives, whose gel content is from 20 to 70% by weight, in particular from 25 to 60% by weight, with good stability of grain, and also with a matt surface, obtained by a process according to at least one of the preceding claims 1 to 24.

26. Use of the grained, multilayer moulding supported by a backing and according to Claim 25 for interior cladding of motor vehicles.

## Revendications

1. Procédé de fabrication d'un corps multicouches moulé et grainé, qui présente un film supérieur qui contient des matériaux polymères partiellement réticulés et éventuellement d'autres additifs, et au moins un film inférieur stratifié sur le premier, le stratifié de film multicouches étant gaufré, traité à l'aide d'un faisceau d'électrons pour obtenir pour le grainage une stabilité qui convient pour une opération d'emboutissage profond, le stratifié de film multicouches traité étant embouti en un corps multicouches moulé et grainé, **caractérisé en ce qu'**au moins un film inférieur est formé d'un matériau polymère moussé dont la masse spécifique est comprise entre 35 et 120 g/l et la teneur en gel est inférieure à 80 %.

2. Procédé selon la revendication 1, **caractérisé en ce qu'**au moins un film inférieur est formé d'un matériau polymère moussé dont la teneur en gel est comprise entre 30 et 70 %.

3. Procédé selon les revendications 1 ou 2, **caractérisé en ce que** le corps multicouches moulé et grainé est doté d'un support.

4. Procédé selon les revendications 2 et 3, **caractérisé en ce que** le support est relié au stratifié de film multicouches grainé lors de la fabrication du corps multicouches moulé et grainé dans l'opération d'emboutissage.

5. Procédé selon la revendication 4, **caractérisé en ce que** la liaison du support au film inférieur configuré comme couche de mousse du stratifié de film en plusieurs couches s'effectue à l'aide d'un système d'adhésif.

6. Procédé de fabrication d'un corps multicouches moulé et grainé qui présente un film supérieur qui contient des matériaux polymères partiellement réticulés et éventuellement d'autres additifs, et au moins un film inférieur stratifié sur le premier, le stratifié de film en plusieurs couches étant traité par un faisceau d'électrons et le stratifié de film multicouches grainé ainsi traité étant transformé en un corps moulé, **caractérisé en ce que** le corps multicouches moulé et grainé soutenu par un support est formé en une seule étape de traitement et largement sans vide et en particulier largement sans système d'adhésif,
(1) en chauffant la surface d'un support dont la structure géométrique est préfabriquée et en le repoussant contre le côté chauffé par l'arrière du stratifié de film multicouches grainé et irradié, ou
(2) en reliant dans un outil un matériau de départ du support qui se trouve à l'état plastique au côté arrière du stratifié de film grainé multicouches et irradié.

7. Procédé selon au moins l'une des revendications précédentes, **caractérisé en ce que** comme matériau de départ polymère, on utilise des polyoléfines.

8. Procédé selon la revendication 7, **caractérisé en ce que** comme matériau polymère de départ, on utilise des polyoléfines sous forme non réticulée.

9. Procédé selon la revendication 8, **caractérisé en ce que** comme matériau polymère de départ, on réticule du polypropylène et/ou du polyéthylène ainsi que leurs copolymères ou terpolymères.

10. Procédé selon les revendications 6 à 9, **caractérisé en ce que** le film supérieur du corps moulé est constitué de :
a) 5 à 30 % en poids d'un polypropylène ou d'un mélange de polypropylènes dont le point de fusion est supérieur à 120 °C et en particulier supérieur à 130 °C, le polypropylène et le mélange de polypropylènes ne contenant pas plus de 20 % en poids d'un polymère séquencé ou d'un homopolymère,
b) de 70 à 95 % en poids d'un copolymère d'éthylène ou d'un mélange de plusieurs copolymères d'éthylène dont le point de fusion est chaque fois inférieur à 110°C, le matériau du film supérieur présentant une teneur en gel d'environ 20 à 70 %.

11. Procédé selon la revendication 19, **caractérisé en ce que** la teneur en polymères séquencés ou en homopolymères est inférieure à 10 % en poids.

12. Procédé selon au moins l'une des revendications 7 à 11 qui précèdent, **caractérisé en ce que** lors de la formation du film supérieur, on utilise un copolymère d'éthylène qui contient comme comonomères ou termonomères de l'acide acrylique, de l'acide méthacrylique, de l'acide sulfurique greffé ou leurs ionomères.

13. Procédé selon au moins l'une des revendications 6 à 12 qui précèdent, **caractérisé en ce que** le film inférieur est constitué d'un matériau compact dont la masse spécifique ne diffère pas plus de 10 % de celle de la couche située par-dessus.

14. Procédé selon au moins l'une des revendications 6 à 13, **caractérisé en ce que** le film inférieur est constitué d'une mousse de polyoléfine ou d'un feutre.

15. Procédé selon au moins l'une des revendications précédentes, **caractérisé en ce que** lors de la réticulation, on utilise un agent auxiliaire de réticulation.

16. Procédé selon la revendication 15, **caractérisé en ce que** l'agent auxiliaire de réticulation est le triacrylate de triméthylolpropane, le triméthacrylate de triméthylolpropane, le cyanurate de triallyle, le divinylbenzène, le diméthacrylate d'éthylène glycol, le diméthacrylate de diéthylène glycol et/ou le poly(diméthacrylate d'éthylène glycol).

17. Procédé selon les revendications 15 ou 16, **caractérisé en ce que** la quantité d'agent auxiliaire de réticulation dans chaque couche de film est inférieure à 10 % en poids.

18. Procédé selon au moins l'une des revendications précédentes, **caractérisé en ce que** des additifs supplémentaires restent dans une ou plusieurs des couches de film.

19. Procédé selon la revendication 18, **caractérisé en ce que** comme additifs supplémentaires, on incorpore des antioxydants, des agents de protection contre la lumière, des agents lubrifiants et/ou des pigments.

20. Procédé selon les revendications 18 ou 19, **caractérisé en ce que** comme antioxydants, on utilise des dérivés de phénol, des lactones et/ou des phosphites et comme agents de protection contre la lumière des amines stériquement gênées en quantité inférieure à 5 % en poids.

21. Procédé selon au moins l'une des revendications précédentes, **caractérisé en ce que** la réticulation est réalisée à l'aide d'un faisceau d'électrons à une dose d'irradiation de 20 à 150 KGy.

22. Procédé selon la revendication 21, **caractérisé en ce que** l'irradiation établit dans le film supérieur une teneur en gel de 20 à 70 %.

23. Procédé selon au moins l'une des revendications précédentes, **caractérisé en ce que** la dureté Shore D (selon DIN 53505) du film supérieur est réglée à moins de 40.

24. Procédé selon au moins l'une des revendications précédentes, **caractérisé en ce que** le stratifié de film grainé est formé dans le cadre d'une seule étape de traitement dans laquelle on stratifie sur le film supérieur un film inférieur moussé et en même temps on gaufre le film supérieur, pour ensuite faire subir un traitement par faisceau d'électrons au stratifié de film ainsi obtenu.

25. Corps multicouches moulé et grainé, soutenu par un support, doté d'un film supérieur à base d'un matériau polymère réticulé et éventuellement d'autres additifs et dont la teneur en gel est de 20 à 70 % en poids et en particulier de 25 à 60 % en poids, avec une bonne stabilité du grainage et une surface mate, obtenu avec un procédé selon au moins l'une des revendications 1 à 24 qui précèdent.

26. Utilisation du corps multicouches moulé et grainé, soutenu par un support, selon la revendication 25, pour l'habillage intérieur de véhicules automobiles.
